# EUROPÄISCHE PATENTANMELDUNG

(11) **EP 1 317 956 A2**
(43) Veröffentlichungstag der Anmeldung: **11.06.2003**
(21) Anmeldenummer: 02027522.8
(22) Anmeldetag: 06.12.2002
(51) Int. Cl.: B01J 19/32

(54) **Geordnete Packung für einen Reaktor**

(30) Priorität: 06.12.2001 DE 10159818
(71) Anmelder: BASF AKTIENGESELLSCHAFT, 67056 Ludwigshafen (DE)
(72) Erfinder: Bey, Oliver, Dr., 67150 Niederkirchen (DE); Zehner, Peter, Dr., 67071 Ludwigshafen (DE); Olbert, Gerhard, 69221 Dossenheim (DE); Haake, Mathias, Dr., 68161 Mannheim (DE)
(74) Vertreter: Isenbruck, Günter, Dr.

(57) **Zusammenfassung**

Geordnete Packung (1) für einen einphasig durchströmten Reaktor mit einem Heiz/Kühlmantel mit zur Reaktorlängsrichtung geneigten Stromleitkanälen (2), die den Reaktorquerschnitt bis auf einen Randspalt (3) ausfüllen und die, über den Reaktorquerschnitt betrachtet, zwei oder mehrere Packungsbereiche (4) mit jeweils zwei oder mehreren Stromleitkanälen bilden, die innerhalb eines Packungsbereichs (4) den gleichen Neigungswinkel zur Reaktorlängsrichtung aufweisen und wobei die Stromleitkanäle aneinandergrenzender Packungsbereiche (4) den gleichen Neigungswinkel zur Reaktorlängsrichtung, jedoch mit unterschiedlichem Vorzeichen aufweisen.

## Beschreibung

Die Erfindung betrifft eine geordnete Packung für einen Reaktor sowie eine Verwendung.

Geordnete Packungen, das heißt mit regelmäßiger Geometrie systematisch aufgebaute Packungen sind in einer Vielzahl von Gestaltungen für den Einsatz in Stoffaustauschkolonnen wie auch in Reaktoren bekannt.

Beispielsweise werden bei den handelsüblichen Packungen, wie Montz A3 und Sulzer BX mehrere Lagen von Geweben - bei anderen Bauformen auch Blechen - in einer Stoffaustauschkolonne derart parallel zueinander in Kolonnenlängsrichtung angeordnet, dass benachbarte Lagen mehr oder weniger dicht abgeschlossene Kanäle bilden, durch die das Fluid strömt. Diese Kanäle werden vorzugsweise gegen die Reaktorlängsrichtung geneigt, wobei in der Regel angrenzende Lagen in verschiedene Richtungen geneigt sind. Diese Richtungen schließen regelmäßig mit der Vertikalen den gleichen Winkelbetrag, jedoch mit unterschiedlichem Vorzeichen, ein. Dabei können die Kanäle gerade oder gebogen sein. Statt Blech- oder Gewebelagen können auch Streckmetalllagen mit oder ohne Perforation verwendet werden.

Aus EP-A 0 785 019 ist eine Packung zur Verwendung in einer Stoffaustauschkolonne bekannt, mit abwechselnd aneinander angeordneten ersten gewellten bzw. geknickten und zweiten schwach gewellten oder bevorzugt ebenen Lagen, wobei die ersten mit den zweiten Lagen jeweils Stromleitkanäle einschließen, die gegen die Vertikale geneigt sind. Hierbei reichen die weniger oder nicht gewellten Lagen nicht in eine Randzone der Packung oder weisen in der Randzone der Packung eine erhöhte Gasdurchlässigkeit, insbesondere Löcher, auf. Die Randzone umfasst einen bis zwanzig, vorzugsweise drei bis zehn Stromleitkanäle. Durch diese besondere Ausgestaltung mit einer Randzone, die als konzentrisches Volumenelement im äußeren Bereich der Packung verstanden wird, wird eine erhöhte Stoffaustauschfläche zwischen der flüssigen und der sich hierzu im Gegenstrom bewegenden gasförmigen Phase und dadurch eine verbesserte Trennleistung der damit bestückten Stoffaustauschkolonne bei vergleichbarem Druckverlust gegenüber bekannten Packungen gewährleistet. Hierfür muss die Randzone mindestens einen Stromleitkanal umfassen.

Reaktionen mit hoher Wärmetönung werden häufig in Reaktoren durchgeführt, die mit einem Doppelmantel ausgestattet sind, durch den ein Wärmetauschmittel zirkuliert. Werden derartige Reaktoren mit geordneten Packungen bestückt, so tritt das Problem auf, dass die sich kreuzenden Stromleitkanäle das Reaktionsfluid im wesentlichen in Reaktorlängsrichtung lenken. Insbesondere bei Verwendung der Packungen als Katalysator oder Katalysatorträger für Reaktionen werden aus Gründen der Bereitstellung einer großen volumenspezifischen Oberfläche fein strukturierte Packungen bevorzugt. Dies hat eine hohe Anzahl von Kreuzungsstellen der Stromleitkanäle zur Folge, mit dem Ergebnis, dass der Stoff- und Wärmetransport in Reaktorlängsrichtung überwiegt. Darüber hinaus wurden bekannte Packungen für Reaktoren mit dem Ziel optimiert, die zur Durchströmung der Packung aufgewendete Leistung weitgehend gleichförmig über den Reaktorquerschnitt zu verteilen. Dies führt jedoch ebenfalls zu einem schlechteren Wärmeübergang an der temperierten Wand. Erforderlich ist jedoch, insbesondere bei Reaktionen mit starker Wärmetönung, ein möglichst isothermes Temperaturprofil über die Reaktorlängs- und querrichtung. Hierfür ist ein guter Wärmetransport zur temperierten Wand erforderlich.

Zur Verbesserung des Stoff- und Wärmetransportes über den gesamten Reaktorquerschnitt ist es erforderlich, dieselben in beiden Achsrichtungen des Reaktorquerschnitts zu verbessern.

Aufgabe der Erfindung war es daher, eine geordnete Packung für einen Reaktor zur Verfügung zu stellen, der einen verbesserten Wärmetransport über den gesamten Reaktorquerschnitt zur temperierten Wand gewährleistet, und die somit die Bildung von Hot-Spots vermeidet oder zumindest reduziert, die zu Einbußen an Selektivität und Katalysatorstandzeit führen.

Diese Aufgabe wird erfindungsgemäß gelöst durch eine geordnete Packung für einen einphasig durchströmten Reaktor mit einem Heiz-/Kühlmantel mit zur Reaktorlängsrichtung geneigten Stromleitkanälen, die den Reaktorquerschnitt bis auf einen Randspalt ausfüllen und die, über den Reaktorquerschnitt betrachtet, zwei oder mehrere Packungsbereiche mit jeweils zwei oder mehreren Stromleitkanälen bilden, die innerhalb eines Packungsbereichs den gleichen Neigungswinkel zur Reaktorlängsrichtung aufweisen und wobei die Stromleitkanäle aneinandergrenzender Packungsbereiche den gleichen Neigungswinkel zur Reaktorlängsrichtung, jedoch mit unterschiedlichem Vorzeichen aufweisen.

Es wurde überraschend gefunden, dass durch die erfindungsgemäße Ausgestaltung der geordneten Packung eine gezielte Erhöhung der Turbulenz im wandnahen Bereich, das heißt in dem Bereich in dem die Wärme übertragen werden kann, erreicht wird. Indem erfindungsgemäß mindestens zwei Packungsbereiche vorgesehen sind, werden Stromleitkanäle jeweils in über den Reaktorquerschnitt betrachtet unterschiedlichen, insbesondere einander gegenüberliegenden Bereichen münden wird der Stoff- und Wärmeaustausch über den Reaktorquerschnitt verbessert.

Die erfindungsgemäße Packung ist für einen einphasig durchströmten Reaktor vorgesehen, das heißt für einen Reaktor, durch den ein Reaktionsmedium strömt, das in einer einzigen, häufig gasförmigen, Phase vorliegt.

Die Packung weist zur Reaktorlängsrichtung geneigte Stromleitkanäle auf, die den Reaktorquerschnitt nicht vollständig ausfüllen, sondern an der Reaktorinnenwand einen Randspalt freilassen.

Dieser Randspalt kann mit konstanter Breite über den gesamten Reaktorquerschnitt ausgebildet sein, jedoch auch über den Reaktorquerschnitt ungleichförmig, dergestalt, dass in Bereichen der Reaktorinnenwand, in denen Stromleitkanäle münden die größte radiale Ausdehnung und in Bereichen in denen keine Stromleitkanäle münden, die geringste radiale Ausdehnung aufweist. Die geringste radiale Ausdehnung kann Null betragen.

Erfindungsgemäß sind die Stromleitkanäle dergestalt ausgebildet, dass sie, über den Reaktorquerschnitt betrachtet, zwei oder mehrere Packungsbereiche mit jeweils zwei oder mehreren Stromleitkanälen bilden, die innerhalb eines Packungsbereichs den gleichen Neigungswinkel zur Reaktorlängsrichtung aufweisen, wobei die Stromleitkanäle aneinander angrenzender Packungsbereiche den gleichen Neigungswinkel zur Reaktorlängsrichtung, jedoch mit unterschiedlichem Vorzeichen aufweisen.

Durch die erfindungsgemäße Ausbildung von mindestens zwei Packungsbereichen, die sich durch die Vorzeichen ihrer Neigungswinkel zur Reaktorlängsrichtung unterscheiden, wird ein verbesserter Stoff- und Wärmeaustausch über den Reaktorquerschnitt erreicht.

Bevorzugt umfasst die erfindungsgemäße Packung zwei Packungsbereiche, die insbesondere gleich groß sind.

Der Reaktorquerschnitt ist grundsätzlich nicht eingeschränkt, bezüglich seiner Querschnittsform, insbesondere rechteckige oder quadratische Querschnitte sind gleichermaßen wie kurvenförmige, beispielsweise kreisförmige oder elliptische Querschnitte möglich. Bevorzugt ist ein kreisförmiger Reaktorquerschnitt, insbesondere in Verbindung mit zwei gleichen Packungsbereichen, mit jeweils halbkreisförmigem Querschnitt.

Die einzelnen Packungsbereiche können jeweils als Monolithen ausgebildet sein, das heißt als einstückige, extrudierte Bauteile. Derartige Ausführungsformen sind besonders kostengünstig, weil mit wenigen Arbeitsschritten gegenüber einer Ausgestaltung der Stromleitkanäle aus einzelnen Metallblechen herstellbar sind.

Es ist jedoch gleichermaßen möglich, die Stromleitkanäle aus parallel zueinander, in Reaktorlängsrichtung angeordneten Stromleitblechen auszubilden. Die Stromleitbleche können bevorzugt geknickt oder gewellt sein. In einer besonders bevorzugten Ausführungsform sind geknickte oder gewellte bzw. ebene Stromleitbleche alternierend angeordnet.

Als Packungsmaterial eignen sich insbesondere keramische Materialien, wie Cordierit, Metalle oder Metalllegierungen.

Bevorzugt können im Randspalt Einbauten vorgesehen sein beispielsweise um die Packung gewickelte Drähte. Einbauten verhindern eine Bypassströmung und verbessern darüber hinaus den Wärmeübergang zur temperierten Wand.

Bevorzugt liegt der Neigungswinkel der Stromleitkanäle zur Reaktorlängsachse im Bereich von 20 bis 70°, insbesondere im Bereich von 30 bis 60°.

Die erfindungsgemäße geordnete Packung kann als Katalysator oder Katalysatorträger ausgebildet sein. Alternativ oder zusätzlich ist es möglich, in die Stromleitkanäle Katalysatorteilchen einzufüllen.

Die erfindungsgemäße Packung kann bevorzugt zur Durchführung von exothermen oder endothermen Reaktionen, insbesondere von Partialoxidationen oder Selektivhydrierungen verwendet werden.

Die Erfindung wir im Folgenden anhand einer Zeichnung sowie eines Ausführungsbeispiels näher erläutert.

Es zeigen im Einzelnen:
- Figur 1a: einen Querschnitt durch eine schematische Darstellungsform einer Ausführungsform einer erfindungsgemäßen Packung,
- Figur 1b: die schematische Darstellung eines Querschnitts durch eine weitere Ausführungsform für einen Reaktor mit rundem Querschnitt,
- Figur 1c: die schematische Darstellung einer Ausführungsform für einen Reaktor mit rechteckigem Querschnitt,
- Figur 2a: die schematische Darstellung eines monolithischen Packungsbereiches,
- Figur 2b: die schematische Darstellung eines Packungsbereiches aus alternierend angeordneten geknickten und ebenen Packungsblechen und
- Figur 3: die Darstellung einer geordneten Packung mit zwei Packungsbereichen.

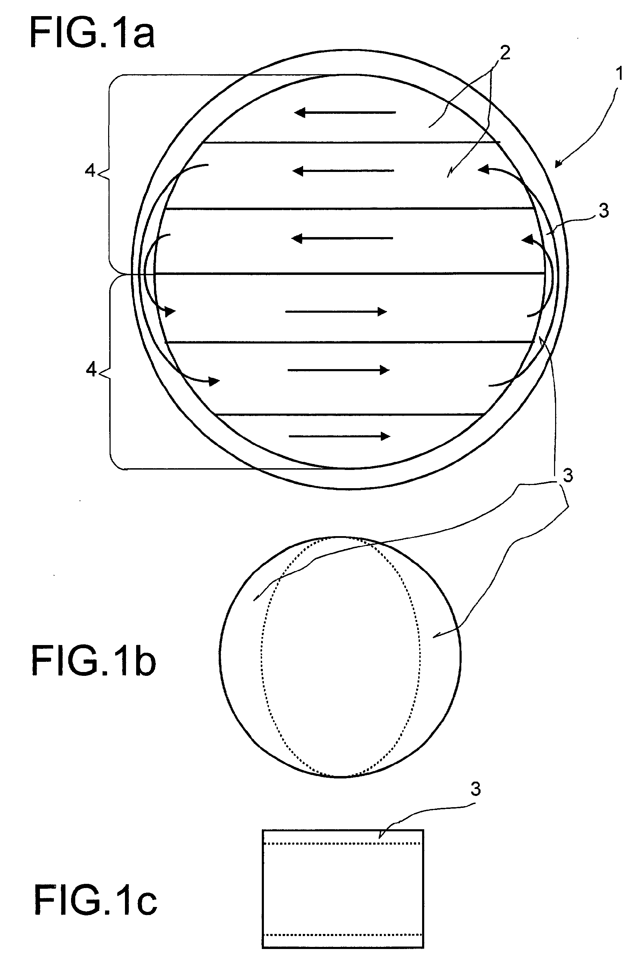

Die schematische Darstellung in Fig. 1 zeigt einen Querschnitt durch eine erste Ausführungsform einer erfindungsgemäßen Packung 1 mit Stromleitkanälen 2, die den Reaktorquerschnitt unter Freilassung eines Randspalts 3 ausfüllen und die, in der Figur beispielhaft dargestellt, zwei, jeweils gleich große Packungsbereiche 4 bilden. Bedingt durch die unterschiedlichen Vorzeichen der Neigungswinkel der Stromleitkanäle 2 in den einzelnen Packungsbereichen münden die Stromleitkanäle an einander über den Reaktorquerschnitt gegenüberliegenden Bereichen der Reaktorinnenwand. Dadurch entsteht im Randspalt eine erhöhte Turbulenz, die einen hervorragenden Stoff- und Wärmetransport über den Reaktorquerschnitt bewirkt.

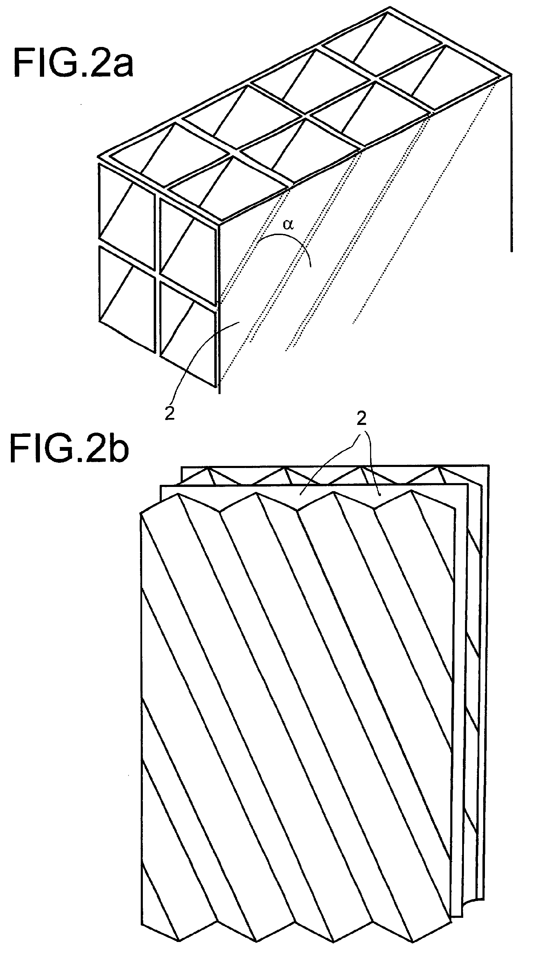

Fig. 1b deutet lediglich schematisch an, dass der Randspalt 3 bevorzugt mit über den Reaktorquerschnitt ungleichförmiger Breite ausgebildet sein kann wobei die geringste Ausdehnung des Randspalts, wie in der Fig. 2b dargestellt, Null betragen kann.

Fig. 1c stellt schematisch einen Reaktor mit rechteckigem Querschnitt dar, wobei der Randspalt entsprechend zu zwei, einander über den Reaktorquerschnitt gegenüberliegenden Spalten mit jeweils rechteckigem Querschnitt verändert ist.

Fig. 2a zeigt schematisch den Aufbau eines Packungsbereiches als extrudierter Monolith. Die Figur verdeutlicht die Stromleitkanäle 2, die zur durch den Pfeil angedeuteten Reaktorlängsrichtung den Neigungswinkel α aufweisen.

Fig. 2b verdeutlicht die Ausbildung von Stromleitkanälen 2 durch parallel zueinander angeordnete Stromleitbleche, wobei geknickte Stromleitbleche mit ebenen Stromleitblechen alternierend angeordnet sind.

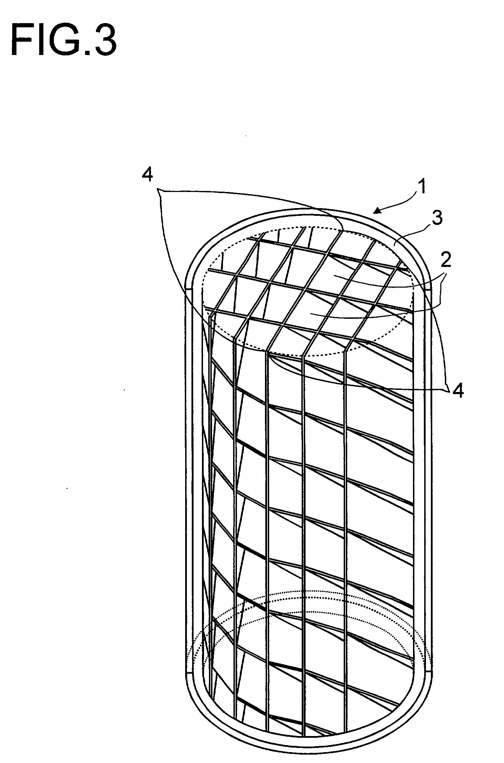

Fig. 3 verdeutlicht ein Ausführungsbeispiel einer erfindungsgemäßen Packung mit zwei Packungsbereichen 4, die jeweils aus einem Monolithen gebildet sind, und die jeweils den gleichen Neigungswinkel zur Reaktorlängsachse, jedoch mit umgekehrtem Vorzeichen aufweisen. Die beiden Packungsbereiche 4 nehmen jeweils die Hälfte des Reaktorquerschnittes, unter Freilassung eines Randspalts 3 ein. Beide Packungsbereiche 4 weisen jeweils geneigte Stromleitkanäle 2 auf.

### Beispiel

In einer Versuchsanlage aus einer beheizten Messstrecke, die von unten mit Luft angeströmt wurde, mit einer Länge von 200 mm und einem Innendurchmesser von 25 mm wurde die Luft über eine mit Dampf mit einer Temperatur von 100°C beheizte Wand erwärmt. Die mittleren Temperaturen wurden beim Eintritt wie auch beim Austritt aus der Messstrecke gemessen. Aus den Temperaturmesswerten wurde der radiale Gesamtwärmedurchgangskoeffizient α_{ges} der Messstrecke ermittelt.

In den Vergleichsversuchen V1 bis V3 wurde eine Packung, die ausschließlich geknickte Leitbleche mit einer Amplitude von 1 mm und einer Wellenlänge von 4 mm aufwies, eingesetzt.

Für die Beispiele (B1 bis B3) nach der Erfindung wurde eine Packung mit Monolithkanälen mit quadratischem Querschnitt einer Seitenlänge von 3 mm eingesetzt. Die Packung war aus zwei Packungsbereichen aufgebaut, die den Querschnitt der beheizten Messstrecke, unter Freilassung eines Randspalts, jeweils hälftig ausfüllten. Der Randspalt hatte keine Einbauten, seine Breite betrug 0,5 mm.

Die Messstrecke wurde jeweils mit drei verschiedenen Durchsätzen beaufschlagt. Hierbei wurden die in der nachstehenden Tabelle aufgeführten Werte für den Druckverlust bzw. den Wärmedurchgangskoeffizienten α_{ges} (αgesamt) für die Beispiele 1 bis 3 nach der Erfindung bzw. die Vergleichsbeispiele 1 bis 3 erhalten.

| | Durchsatz | Druckverlust | Wärmedurchgangskoeffizient α_{ges} |
|---|---|---|---|
| V1 | 2,2 Nm³/h | 4 mbar | 44 W/(m²K) |
| V2 | 4,4 Nm³/h | 11 mbar | 59 W/(m²K) |
| V3 | 14,1 Nm³/h | 83 mbar | 95 W/(m²K) |
| B1 | 2,2 Nm³/h | 23 mbar | 72 W/(m²K) |
| B2 | 4,4 Nm³/h | 78 mbar | 133 W/(m²K) |
| B3 | 14,1 Nm³/h | 560 mbar | 250 W/(m²K) |

## Patentansprüche

1. Geordnete Packung (1) für einen einphasig durchströmten Reaktor mit einem Heiz/Kühlmantel mit zur Reaktorlängsrichtung geneigten Stromleitkanälen (2), die den Reaktorquerschnitt bis auf einen Randspalt (3) ausfüllen und die, über den Reaktorquerschnitt betrachtet, zwei oder mehrere Packungsbereiche (4) mit jeweils zwei oder mehreren Stromleitkanälen bilden, die innerhalb eines Packungsbereichs (4) den gleichen Neigungswinkel zur Reaktorlängsrichtung aufweisen und wobei die Stromleitkanäle aneinandergrenzender Packungsbereiche (4) den gleichen Neigungswinkel zur Reaktorlängsrichtung, jedoch mit unterschiedlichem Vorzeichen aufweisen.

2. Geordnete Packung (1) nach Anspruch 1 mit zwei, bevorzugt gleich großen Packungsbereichen (4).

3. Geordnete Packung (1) nach Anspruch 1 oder 2, **dadurch gekennzeichnet, dass** der Reaktorquerschnitt rund ist.

4. Geordnete Packung (1) nach einem der Ansprüche 1 bis 3, **dadurch gekennzeichnet, dass** jeder Packungsbereich 4 aus einem Monolithen gebildet ist.

5. Geordnete Packung (1) nach einem der Ansprüche 1 bis 3, **dadurch gekennzeichnet, dass** die Stromleitkanäle (2) aus parallel zueinander, in Reaktorlängsrichtung angeordneten Stromleitbleche gebildet sind.

6. Geordnete Packung (1) nach Anspruch 5, **dadurch gekennzeichnet, dass** die Stromleitbleche alternierend geknickt oder gewellt bzw. eben ausgebildet sind.

7. Geordnete Packung (1) nach einem der Ansprüche 1 bis 6, **dadurch gekennzeichnet, dass** im Randspalt (3) Einbauten angeordnet sind.

8. Geordnete Packung (1) nach einem der Ansprüche 1 bis 7, **gekennzeichnet durch** einen Neigungswinkel der Stromleitkanäle (2) zur Reaktorlängsachse im Bereich von 20 bis 70°, bevorzugt im Bereich von 30 bis 60°.

9. Geordnete Packung (1) nach einem der Ansprüche 1 bis 8, **dadurch gekennzeichnet, dass** die Packung als Katalysator oder Katalysatorträger ausgebildet ist und/oder dass in die Stromleitkanäle (2) oder in einen Teil der Stromleitkanäle (2) Katalysatorteilchen eingebracht sind.

10. Verwendung einer geordneten Packung (1) nach einem der Ansprüche 1 bis 9 zur Durchführung von exothermen oder endothermen Reaktionen, bevorzugt von Partialoxidationen oder Selektivhydrierungen.
